Europäisches Patentamt

(19) European Patent Office

Office européen des brevets

(11) Publication number: **0 003 646**
A1

(12) # EUROPEAN PATENT APPLICATION

(21) Application number: 79300128.0

(51) Int. Cl.²: **B 60 K 17/30**

(22) Date of filing: 26.01.79

---

(30) Priority: 04.02.78 GB 458378
04.02.78 GB 458578

(43) Date of publication of application: 22.08.79
Bulletin 79/17

(84) Designated Contracting States: BE DE FR GB IT LU NL
SE

(71) Applicant: GKN Group Services Limited, Group Head
Office P.O. Box 55, Smethwick Warley West Midlands
B66 2RZ (GB)

(72) Inventor: Fry, Timothy Selwyn, 13 Southam Road,
Dunchurch Warwickshire (GB)
Inventor: Balmforth, Harry, 10 Elmdene Close, Hatton
Nr. Warwick, CV35 8XL (GB)

(74) Representative: Robertson, Bernard Collett et al, Guest,
Keen & Nettlefolds Limited Group Head Office P.O.
Box 55, Smethwick, Warley West Midlands
B66 2RZ (GB)

(54) **Axles.**

(57) A steerable driven axle assembly, in which the steering
axis (41, 156) lies in the centre plane of the wheel perpendicular to the rotational axis thereof, said plane also pass-
ing through a bearing element (24, 141) which supports a
hub member carrying the wheel, and containing the bend-
ing centre of a universal joint through which the wheel is
driven.

EP 0 003 646 A1

ACTORUM AG

1

78.151/GMD    Centre Line Steer & Bearing

This invention relates to steerable driven axle assemblies.

According to the invention, we provide a steerable driven axle assembly, comprising a support member, a housing, first bearing means providing for swivelling movement of said housing relative to said support member about a steering axis, a hub member, second bearing means mounting said hub member in said housing for rotation, a universal joint providing for drive of said hub member from an input member, and a wheel and tyre carried by said hub member, wherein said steering axis lies in a centre plane of the wheel and tyre perpendicular to the rotational axis thereof, the bending centre of said universal joint also lies in said plane, and said second bearing means includes an element through which said plane passes.

By the disposition of the steering axis in the centre plane of the wheel perpendicular to the rotational axis thereof, true centre point steering of the wheel is provided. Hitherto, whilst a form of centre point steering (the axis about which a wheel undergoes steering movement crossing the plane of the wheel at the centre of the area of contact of the tyre thereof with the ground) has been achieved the steering axis has usually been inclined to the centre plane of the wheel. One result of this is a rising and falling motion of the centre of the wheel during steering movement thereof, which is not desirable. By the present invention, however, this effect is avoided.

By disposing the universal joint so that its bending centre (i.e. the point of intersection of the axes of the input and output members of the universal joint when the joint is bent) is in said plane and on said steering axis, the joint is not required to accommodate any plunge (axial movement between the input and output members of the joint) due to steering action. It will be appreciated that plunge may still be required to be accommodated in the means by which the hub member is driven, because of suspension movement, but this could be accommodated by a universal joint at the inboard end of a drive shaft forming or connected to said input member, whilst operating conditions for the universal joint driving the hub member remain such that it need not accommodate plunge.

The arrangement of said second bearing means with an element thereof occupying said plane is advantageous because it provides support of the hub member in alignment with the first bearing means which provides for steering movement of the housing. This is the most desirable location for such a bearing.

The first bearing means may be disposed entirely below the axis of rotation of the hub. This is advantageous because forces acting on the tyre at the area of contact therewith with the ground act at a small moment arm from the first bearing means, thereby reducing loads thereon. Further, it enables a low disposition of the support member (e.g. an axle beam) which carries the housing and hub assembly.

The invention will now be described by way of example with reference to the accompanying drawings, of which:

FIGURE 1 is a vertical section through an assembly embodying the invention.

FIGURE 2 is a vertical section through another form of assembly embodying the invention.

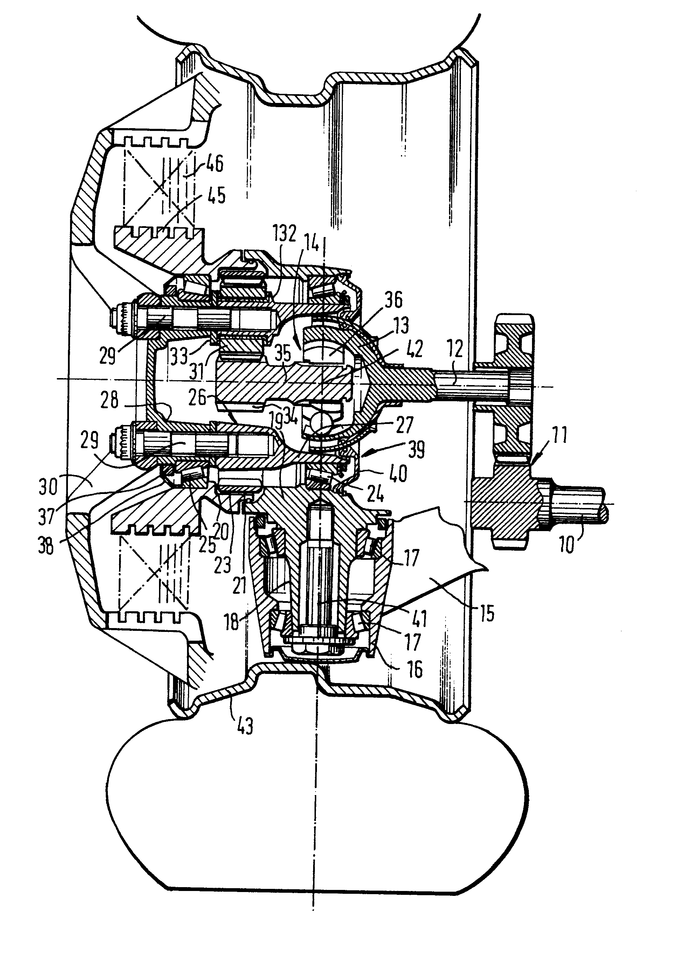

Referring firstly to Figure 1 of the drawings, there is illustrated an assembly comprising a support member 15 which may, for example, be the end of an axle beam secured by appropriate linkage to a vehicle, which carries a housing 19 rotatably mounting a hub 26. The support member 15 depends downwardly and has at its lower a hollow boss 16 containing bearings 17 mounting a spigot 18 for movement about an axis 41. The spigot 18 is formed integrally with the housing 19.

The housing has an extension 20 at its left hand end which is spigoted at 21 into the housing 19. An annular gear 22 is splined at 23 to the extension 20 and is located axially between the housing 19and the extension 20.

The housing 19 carries a roller bearing 24 and the extension 20 carries the roller bearing 25 and in these roller bearings 24 and 25 is mounted a rotatable hub and planet carrier 26. This hub comprises two parts, a right hand part 27 and a left hand and cup-shaped part 28. The parts are secured together with studs 29 which also serve to secure a wheel rim supporting member 30 to the hub. The right hand part 27 of the planet carrier carries a number of planet gears, one of which is indicated at 31, the gears being located axially between an integral flange 32 on the part 27 and washer 33 trapped between the parts 27 and 28. The planet gears mesh with the annulus gear 22 and also with a sun gear 34 which is formed at the left hand end of the shaft 35 which carries at its right hand end the inner race 36 of a constant velocity ratic (homo-kinetic) universal joint 14. The sun gear is located radially solely by the joint 14 and the planet gears 31. The left hand end of the hub is sealed by means of the cup-shaped member 28 and a seal 37 engaging the external periphery of the cup-shaped member and carried by a boot 38 secured to the extension 20. The right hand end of the hub is sealed by sealing means indicated generally at 39. The sealing means includes a boot 40 fitting within the housing 19. The outer race 13 of the joint 14 is integral with an input shaft 12, to be driven by a reduction gearing 11 and shaft 10 shown by way of example only.

The wheel supporting member 30 has secured thereto by an adapter ring, not shown, a rim 43 having a low profile tyre 44.

In this arrangement, drive to the hub takes place from the shaft 10 through the reduction gears 11, the universal joint 14, the epicyclic hub reduction gearing 34, 31 and 22 and via the planet carrier 26. It is to be noted that the steering axis 41 of the sub-assembly passes through the centre 42 of the universal joint and through the right hand bearing 24. The axis also passes through the centre of the tyre contact patch thus giving centre point steering, as hereinbefore referred to, the axis lying in the central plane of the wheel and tyre.

The housing 19, 20 has a fixed brake part 45 integral therewith and a brake pack has alternate discs splined to the part 45 and the member 30.

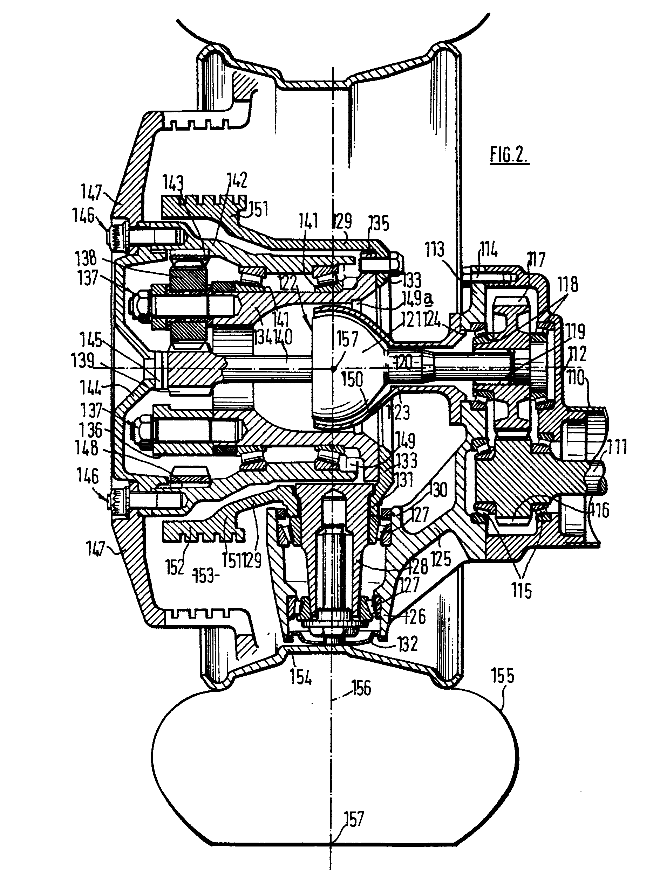

Referring now to Figure 2, part of an axle casing is indicated at 110 and this contains a drive shaft 111. The axle casing 110 carries at its end a gear case 112 having a cover 113 secured in position by bolts 114.

The end of the drive shaft 111 is supported in taper roller bearings 115 in the gearcase 112 and carries a spur gear 116. Meshing with the spur gear 116 is a further spur gear 117 mounted in taper roller bearings 118. The gears 116 and 117 constitute a reduction gear pair. The gear 117 has a splined bore 119 in which is received the splined end of a shaft 120 which, at its other end, is secured to the outer race 121 of a homokinetic universal joint 122. The shaft 120 is supported in a housing 123 which is spigotted at 124 into the cover 113. The outer race 121 of the joint is thus supported for rotation on the gearcase 112 and thus by the axle casing 110.

The cover 113 of the gearcase 112 is provided with an arm 125 projecting at a downward inclination; at the lower end of the arm there is provided a boss 126. The boss contains two roller bearings 127 in which is mounted a spigot 128 secured to a generally cylindrical housing 129. The housing forms part of the steerable sub-assembly. The bore of the boss 126 is closed at its upper end by a seal 130 acting between the boss and a spigot 131 on the housing 129. The bottom of the bore in the boss is closed by a spring plate 132. The right hand end of the housing 129 is provided with an inturned flange 133 to which is bolted a generally cylindrical member 134 having an outturned flange 135 at its right hand end which fits within the flange 133. At its left hand end the member 134 has secured thereto a planet gear carrier 136 by studs and nuts 137. The planet gear carrier carries a number of planet gears, one of which is indicated at 138. The planet gears mesh with a sun gear 139 at the left hand end of a shaft 140 whose right hand end carries the inner part, not shown, of the joint 122. The sun gear 139 is located radially wholly by the inner part of the joint and by the planet gears 138.

Mounted on the outer surface of the cylindrical member 134 are two roller bearings 141 which support a rotatable hub 142. The left hand end of the hub has mounted therein an annulus gear 143 which meshes with the planet gears 138. The left hand end of the hub is closed by a cover plate 144 having a hardened steel insert 145 to engage the end of the shaft 140. The cover plate 144 is held in position by studs and nuts 146, which also hold the wheel rim supporting member 147. The annulus gear 143 has a splined external surface which engages internal splines

6 0003646

148 at the left hand end of the member 134 and the annulus gear is held in position by the cover plate 144. At its right hand end the hub 142 is sealed to the member 134 by means of a seal 149. The bore of the member 134 is sealed via a seal 149a to a bell-mouth 150 at the left hand end of the housing 123.

At its left hand end the housing 129 has an out-turned flange 151 which carries a fixed brake part 152. A disc pack indicated at 153 has alternate discs splined to the part 152 and to the wheel supporting member 147. The latter is connected via an adaptor ring, not shown, to a wheel rim 154 carrying a low profile tyre 155.

The driven wheel is driven from the drive shaft 111 through the reduction gearing 116, 117, the shaft 120, the joint 122, the shaft 140 and the hub reduction gearing 139, 138, 143, the hub rotating on the bearings 141. The sub-assembly of the hub reduction gear and the inner race of the joint is steerable about the axis 156 which is the axis of the steering swivel and also passes through the radial centre 157 of the joint 122. The axis 156 also passes through the centre of the contact patch 157 of the tyre thus to give centre-point steering. It will also be noted that the axis 156 passes through the right hand wheel bearing 141. Furthermore it is pointed out that the brake part 152 is integral with the housing.

Lubricant is retained in the sub-assembly by means of the seals 149 and 149a.

In the assemblies of Figures 1 and 2, hubs incorporating epicyclic reduction gearings are depicted. However, the invention is applicable to assemblies which do not incorporate such gearing, i.e. in which the constant velocity ratio universal joint and the wheel are directly connected.

As illustrated, the steering axis of each embodiment of the invention has been depicted as vertical. It will be appreciated that in practice the steering axis may well be inclined to the vertical, but according to the invention such axis lies in the centre plane of the wheel.

CLAIMS

1.    A steerable driven axle assembly, comprising a support member, a housing, first bearing means providing for swivelling movement of said housing relative to said support member about a steering axis, a hub member, second bearing means mounting said hub member in said housing for rotation, a universal joint providing for drive of said hub member from an input member, and a wheel and tyre carried by said hub member, characterised in that said steering axis (41,156) lies in a centre plane of the wheel and tyre perpendicular to the rotational axis thereof, the bending centre of said universal joint (14,122) also lies in said plane, and said second bearing means includes an element (24,141) through which said plane passes.

2.    An axle assembly according to Claim 1, further characterised in that said first bearing means (17,127) is disposed wholly below the rotational axis of the wheel and tyre.

3.    An axle assembly according to Claim 1 or Claim 2 further characterised in that said second bearing means comprises roller bearings (24,25, 141) spaced axially of said hub member, said plane passing through one of said roller bearings (24, 141).

4.    An axle assembly according to either one of the preceding claims, further characterised in that said hub member incorporates reduction gearing (34,31,22; 136, 139, 143).

FIG.2.

# EUROPEAN SEARCH REPORT

**European Patent Office**

| | DOCUMENTS CONSIDERED TO BE RELEVANT | | CLASSIFICATION OF THE APPLICATION (Int. Cl.²) |
|---|---|---|---|
| Category | Citation of document with indication, where appropriate. of relevant passages | Relevant to claim | |
| X | <u>GB - A - 377 997</u> (LJUNGSTROEM) <br> * Page 1, line 38 - page 2, line 66: figure * <br><br> -- | 1,2,3 | **B 60 K 17/30** |
| X | <u>GB - A - 378 018</u> (LJUNGSTROEM) <br> * Page 2, line 11 - page 4, line 4; figures 1-6 * <br><br> -- | 1,2,3 | |
| X | <u>GB - A - 179 730</u> (STANHOPE) <br> * Page 1, line 42 - page 2, line 2; figures A,B * <br><br> -- | 1,2,3 | TECHNICAL FIELDS SEARCHED (Int.Cl.²) <br><br> **B 60 K** <br> **B 62 D** <br> **B 60 B** |
| | <u>FR - A - 382 336</u> (WRIGHT) <br> * Page 1, line 22 - page 2, line 21; figures 1,2 * <br><br> -- | 1,3 | |
| | <u>FR - A - 704 167</u> (GALLAND) <br> * Entire document * <br><br> -- | 1,3 | |
| | <u>US - A - 1 695 579</u> (DUSSEAU) <br> * Page 1, line 33 - page 2, line 56; figures 1-5 * <br><br> -- | 1,3 | CATEGORY OF CITED DOCUMENTS |
| X | <u>FR - A - 353 773</u> (ATELIERS HONGROIS) <br> * Entire document * <br><br> -- <br><br> ./. | 1,3,4 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| The present search report has been drawn up for all claims | | | &: member of the same patent family, corresponding document |

| Place of search | Date of completion of the search | Examiner |
|---|---|---|
| The Hague | 26-04-1979 | ESPEEL |

EPO Form 1503.1 06.78

European Patent Office

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | FR - A - 474 825 (DELAHAYE) <br> * Entire document * <br><br> -- | 1,3,4 | |
| A | GB - A - 15 980 AD 1915 (WATNEY) | 1 | |
| A | GB - A - 9751 AD 1909 (WRIGHT) | 1,3 | |
| A | FR - A - 834 525 (GABOS) | 1 | |
| A | FR - A - 405 586 (NASCORD) | 1,3 | |
| A | US - A - 2 817 407 (KOST) <br><br> ---- | 1,3,4 | TECHNICAL FIELDS SEARCHED (Int. Cl.²) |

EPO Form 1503.2  06.78